# EUROPEAN PATENT SPECIFICATION

(11) **EP 1 590 270 B1**
(45) Date of publication and mention of the grant of the patent: **23.04.2008**
(21) Application number: 03812109.1
(22) Date of filing: 05.12.2003
(51) Int. Cl.: B65F 1/00, B65F 1/14, F16M 11/00, F16M 11/20

(54) **ROTATABLE BASE ASSEMBLY FOR WASTE CONTAINERS**
DREHBARE BODENKONSTRUKTION FÜR MÜLLCONTAINER
ENSEMBLE A BASE ROTATIVE POUR CONTENEURS A DECHETS

(30) Priority: 05.12.2002 AU 2002953126
(43) Date of publication of application: 02.11.2005
(73) Proprietor: Roemay PTY. LTD., Ashmore, Gold Coast, Queensland 4214 (AU)
(72) Inventor: LANSDOWN, Kevin, Sydney, GOLD COAST, Queensland 4214 (AU)
(74) Representative: Gee, Steven William
(86) International application number: PCT/AU2003/001622
(87) International publication number: WO 2004/050512

(56) References cited:
- DE-A- 2 709 836
- DE-U- 8 902 806
- DE-U- 20 120 521
- DE-U1- 20 020 760
- DE-U1- 29 708 136
- GB-A- 2 346 126
- US-A1- 2001 032 916

## Description

### Technical Field

This invention relates to a rotatable base assembly and in particular to a rotatable base assembly for supporting waste containers.

### Background Art

Containers for containing refuse or waste are in many different configurations. In one configuration, the containers are mobile containers provided on one side of their base with a pair of wheels and gripping handles above the wheels which enables a container to be gripped, tipped towards the wheels so as to be supported thereby and wheeled to a desired location where the container is usually stored or to a location where the container can be left to be engaged by a refuse or waste collection vehicle for elevation and tipping so that the contents of the container are discharged into a collection hopper. Containers of this type are also provided with a hinged lid with the hinge axis being located substantially parallel to the axis of the wheels and adjacent the gripping handles and with handles for the lid being provided on the side of the lid opposite the container gripping handles. Refuse or waste containers of this type are commonly known as "wheelie" bins.

Such bins provide a convenient means by which household refuse or the like can be deposited and then collected and removed from premises however they are relatively bulky and therefore they occupy a substantially space. In many occasions particularly where these bins are used in association with multi-unit dwellings or in other situations where only a limited space exists, access to the bins is often difficult. For example, where the bins are wheeled into a confined space such as against a wall where they are normally left, it is difficult for person wishing to deposit waste into the bins to reach the lid handles and lift the lid as the lid handles are on the far side of the bin. If the bin is to be positioned so that the lid is easily accessible, that is so that the lid handles are on the near side, it is often difficult to move and manipulate the bin into a convenient position whilst ensuring that refuse or waste does not spill from the bin or the bin does not tip over. This thus creates a hygiene and safety problem. Manipulation of the bin is particularly difficult where the texture of the surface on which the bin is located is loose such as a gravel or earth surface as the wheels tend to dig into the surface.

German Patent application No. 27 09 836 discloses a rotatable base assembly for a waste container which includes a platform and a base with the platform supported on the base for rotation about a substantially vertical axis. The platform has an upper surface and an entry/exit at the front of the platform through which a said waste container may be moved wholly onto the platform or moved from the platform. An arm is provided to extend partway around the container to constrain the waste container on the platform. The platform however does not allow a container having supporting wheels to be positioned wholly on the platform or wheeled from the platform and thus does not have means for receiving and constraining the wheels of a waste container.

### Summary of the Invention

The present invention aims to provide in one aspect a rotatable base assembly for refuse or waste containers, which overcomes or alleviates one or more of the above disadvantages.

The present invention thus provides a rotatable base assembly for a single waste container of the type having a pair of opposite wheels by which said container may be wheeled when tipped, said base assembly having a platform and a base, said platform being supported on said base for rotation about a substantially vertical axis, said platform having a planar upper surface and a front and a rear, an entry/exit at the front of said platform through which a said waste container may be moved wholly onto said platform or moved from said platform, and means for constraining said waste container on said platform, characterised in that said constraining means includes one or more ribs or ridges on opposite sides of said platform and extending upwardly relative to said planar upper surface of said platform, said ribs or ridges defining recesses for receiving said wheels of said waste container for locating said container on said platform whereby a waste container supported on said platform may be rotated with said platform about said vertical axis.

Most preferably, the waste container also has a chamber and manipulating handles located at an upper end of the chamber above the wheels. A lid is hinged to the chamber adjacent the manipulating handles for movement about an axis extending substantially parallel to the wheel axis and the lid is provided with handles remote from the hinge axis of the lid.

The rib or ridges may converge towards each other from the front to the rear of the platform. The constraining means may also include a rib or ridge located at the rear of the platform which acts as a stop to the waste container. The front of the platform however most preferably is free of a rib or ridge to enable the waste container to be readily moved onto the platform. The ribs or ridges may define a platform area substantially complementary to the cross section of the container at and including the wheels.

Pivot means between the platform and base suitably define the vertical axis about which the platform may rotate relative to the base. The pivot means may comprise axle means adapted to be located in aligned apertures arranged centrally in the platform and base. The axle means in one form may comprise a pin. The pin may inserted through the apertures in the platform and base and positively engage with the base. The pin may have a head end and a shank which is inserted through the apertures in the platform and base. Preferably, the pin snap engages with the base to positively secure the platform to the base. For this purpose, the pin shank may have a leading barbed end for snap engagement with the base.

Preferably, bearing means are provided between the platform and base to support the platform on the base. The bearing means are preferably located at a radial spacing from the centre of the platform and base. Preferably the bearing means are supported on one of the platform and base and cooperate with an annular track on the other of the platform or base. Most preferably, the bearing means are supported on the platform and cooperate with an annular track provided on the base.

The bearing means most suitably comprise a plurality of bearings. The bearings may in one form comprise rollers mounted for rotation about axes extending radially from the centre of the platform or base. The rollers may have axles which engage with axle holders on the underside of the platform.

In another arrangement, the bearings may comprise ball bearings. The ball bearings may be supported in complementary part spherical recesses in the platform or base for cooperation with a track in the base or platform respectively.

The platform is suitably rotatable between a first position in which the waste container may be moved wholly onto the platform through the entry/exit to a position over the pivot axis or moved from the platform through the entry/exit and a second position in which the container and platform are rotated about the vertical axis such that the container is constrained from movement to or from the platform.

### Brief Description of the Drawings

In order that the invention may be more readily understood and put into practical effect, reference will now be made to the accompanying drawings which illustrate a preferred embodiment of the invention and wherein:-
Fig. 1 is a perspective view of a rotatable base assembly for refuse or waste containers;
Fig. 2 is an exploded perspective view of the rotatable base assembly of Fig. 1;
Fig. 3 is a plan view of the rotatable base assembly of Fig. 1;
Fig. 4 is a sectional view along line A-A of Fig. 3;
Figs. 5 and 6 are plan views of the platform and base of the base assembly;
Figs. 7 to 10 illustrate the manner in which the rotatable base assembly may be used in combination with a waste container;
Fig. 11 is a perspective view of an alternative form of rotatable base assembly according to the invention carrying a waste container; and
Fig. 12 is a plan view showing the relationship between the waste container and rotatable base assembly of Fig. 11.

### Detailed Description of the Preferred Embodiments

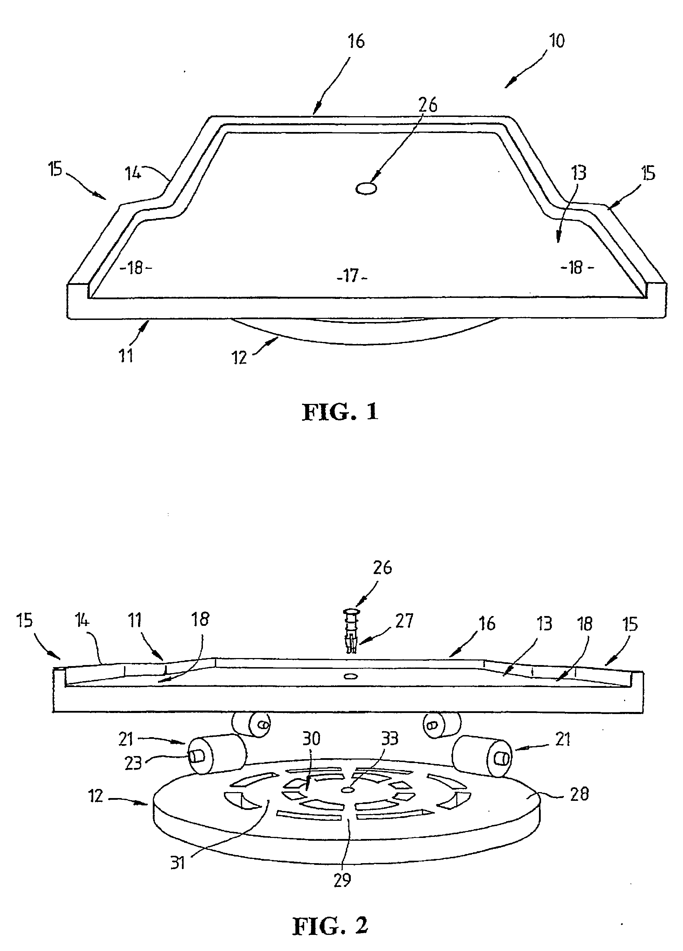

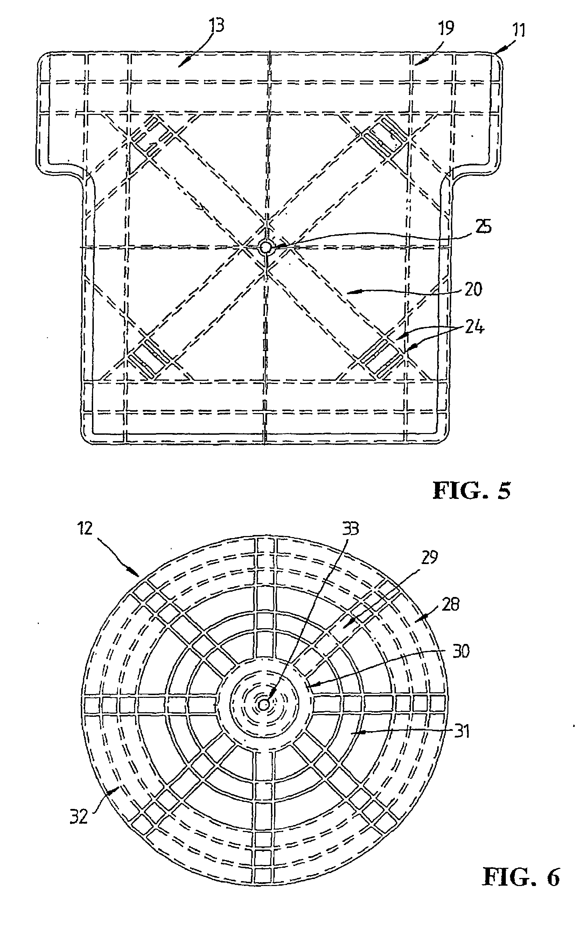

Referring to the drawings and firstly to Figs. 1 to 6, there is illustrated a rotatable base assembly 10 for refuse or waste containers according to a first embodiment of the present invention, the rotatable base assembly 10 having a platform 11 on which a refuse container may seat and a base 12 upon which the platform 11 is supported for rotation about a substantially vertical axis.

The platform 11 is of broad T-shaped configuration in plan view which matches generally the shape of the base of a standard waste container and the supporting wheels thereof. The platform 11 includes a substantially planar upper surface 13 and upstanding ribs or ridges 14 extending along both sides 15 of the platform 11 and rear 16 of the platform 11. The front 17 of the platform 11 however is free or ribs or ridges 14 and this is open to enable a waste or refuse container to be placed onto or removed from the platform 11 as described further below. The ribs or ridges 14 extending along the opposite sides of the platform 11 define opposite locating recesses 18 in which the wheels of a waste container may locate.

The surface 13 of the platform 11 is supported on its underside by a series of stiffening ribs or flanges 19 including pairs of diagonally extending parallel ribs or flanges 20 between which respective supporting wheels 21 may be located, the axes 22 of the wheels 21 lying along lines extending radially from the centre of the platform 11. The wheels 21 are provided with axles 23, the ends of which extend from opposite ends of the wheels 21. Pairs of forked ribs 24 extend between the pairs of diagonal ribs 20 at the same radial spacing from the centre of the platform 11 into which opposite ends of the axles 23 may snap engage such that the wheels 21 are secured releasably to the underside of the platform 11.

The platform 11 is further provided at its centre with a circular opening 25 to receive an axle pin 26, the shank of which has at its leading end an enlarged barb 27 which is split radially and which is adapted to secure the platform 11 to the base 12.

The base 12 is of a circular configuration in plan view and includes on its upper side an outer annular substantially planar track 28 supported by integrally formed radially extending ribs 29 to a central hub 30. An intermediate annular member 31 is provided between the track 28 and hub 30. A series of stiffening ribs or flanges 32 are provided on the underside of the track 28, member 31 and hub 30 to provide sufficient stiffness to the base 12 to resist loadings applied by a waste container supported on the platform 11 and through the wheels 21 on the base 12.

The hub 30 is centrally apertured at 33 to receive the barbed end 27 of the axle pin 26 which may snap-lock into the aperture 33 to positively retain the platform 11 to the base 12 but permit rotational movement of the platform 11 relative to the base 12 about a substantially vertical axis defined by the axle pin 26.

When the platform 11 is secured to the base 12, the wheels 21 are aligned with and supported on the track 28 to provide support to the platform 11 from the underside with the wheels 21 running along the track 28 with rotation of the platform 11 relative to the base 12 in opposite directions.

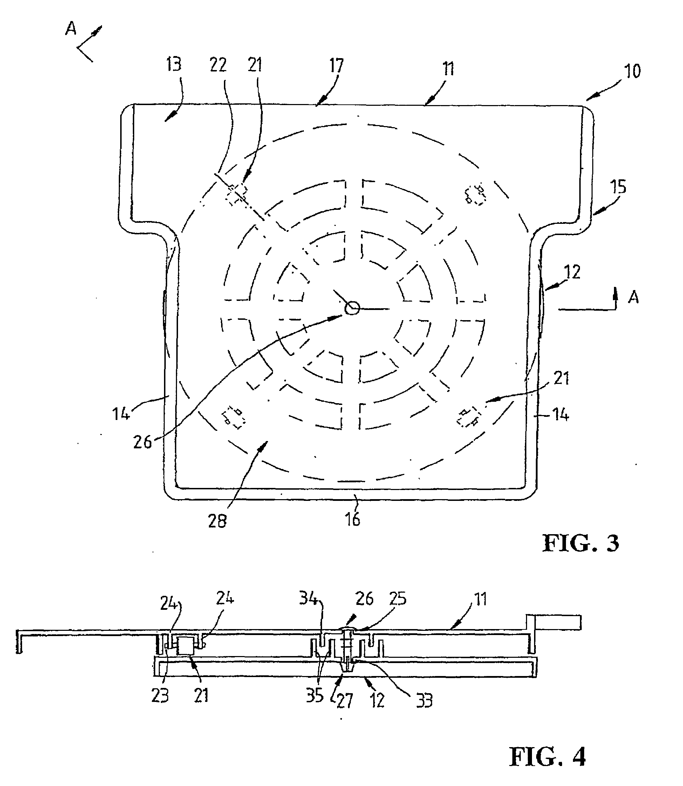

To prevent or reduce the risks of dirt and dust reaching the axle pin 26 and thereby restricting rotation of the platform 11 relative to the base 12, the platform 11 may be provided with a downwardly extending annular rib 34 coaxial with the opening 25 and the platform 11 is provided with a pair of spaced apart upwardly extending annular ribs 35 coaxial with the opening 33 (see Fig. 4). When the platform 11 is supported to the base 12, the rib 34 extends downwardly to be located between the respective upwardly extending ribs 35 to present a series of cooperating barriers to minimise the risks of dust, dirt or other materials fouling the axle pin 26.

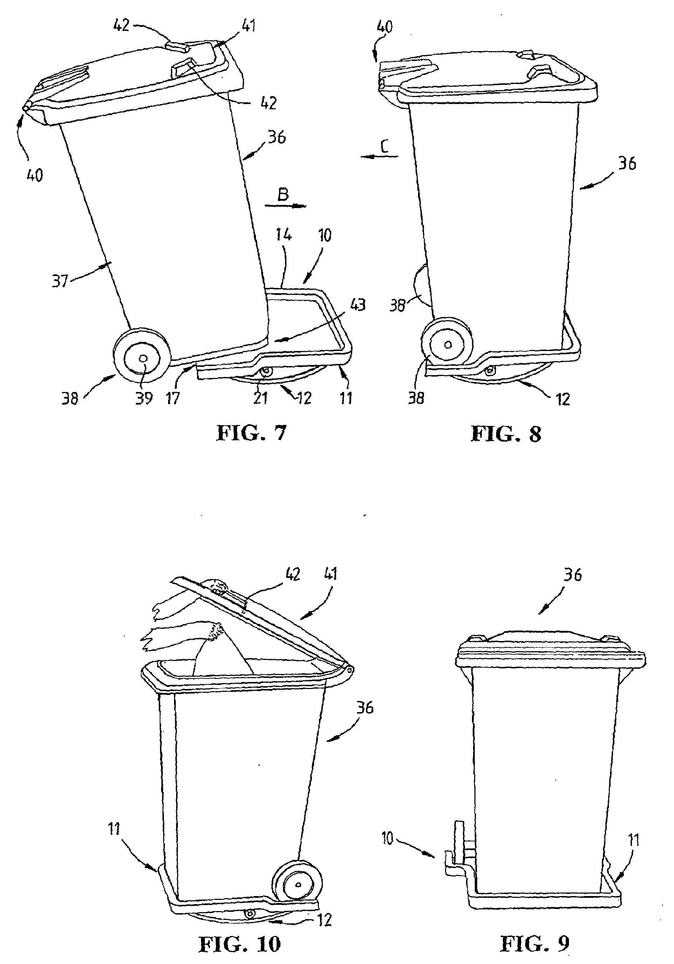

The rotatable base assembly 10 is particularly suited to use with a waste container 36 (see Figs. 7 to 10) of the type known as a wheelie bin which is formed of plastics and which has a generally rectangular elongated chamber 37 provided with a pair of wheels 38 mounted on a horizontal axle 39 extending along one side of the bottom of the chamber 37 and manipulating handles 40 at the upper end of the chamber 37 above the wheels 38. The container 36 additionally includes a lid 41 which is hingedly connected to top of the chamber 37 at or adjacent the handles 40 for movement about an axis extending substantially parallel to wheel axle 39. The lid 41 additionally include a pair of integrally formed handles 42 which facilitate lifting of the lid 41 and deposit of waste into the chamber 37, the handles 42 being located on the side of the lid 41 opposite its hinge axis.

As shown in Figs. 7 to 10, the assembled rotatable base assembly 10 is positioned in a substantially horizontal attitude on the ground where the waste container 36 is usually located. Where the waste container 36 is to be placed onto the platform 11 of the base assembly 10, the platform 11 is rotated such that the open front 17 thereof is directed outwardly. The waste container 36 is then wheeled into a position in alignment with the base assembly 10 and tipped rearwardly about its wheel axle 39 such that its leading end is raised and can be moved through the open front 17 onto the platform 11 as illustrated in Fig. 7. Further forward force applied to the container 36 in the direction B will cause the bottom 43 of the container 36 to seat substantially flat on the platform 11 which then slides forwardly to the position of Fig. 8 in which the container 36 is fully supported on the platform 11 with the wheels 38 locating within the recesses 18 which prevents further forward movement of the container 36. The container 36 may be guided onto the platform 11 by contacting the ribs or ridges 14 and the leading end of the container 36 may contact the ridge 16 at the front of the platform 11 which acts as a stop.

The container 36 and platform 11 may then be rotated relative to the base 12 (in this case clockwise) from the position of Fig. 8, through the position of Fig. 9 to the position of Fig. 10 where the container 36 and platform 11 are in a position approximately 180° from the position of Fig. 8. In the Fig. 10 position, the handles 42 of the lid 41 are located on the near side adjacent to the user and are thus readily accessible enabling them to be grasped to lift the lid 41 for deposit of waste 44 into the chamber 37 as shown.

When the container 36 is full and heavy and/or it is time to place the container 36 out for emptying, the container 36 and platform 11 are rotated back to the position of Fig. 8 where the gripping handles 40 are adjacent the user. The gripping handles 40 may then be grasped by the user, the container 36 slid rearwardly in the direction C in Fig. 8 and pivoted downwardly to the position of Fig. 7 such that the container 36 is supported on its wheels 38. The container 36 may then be wheeled to a position for collection.

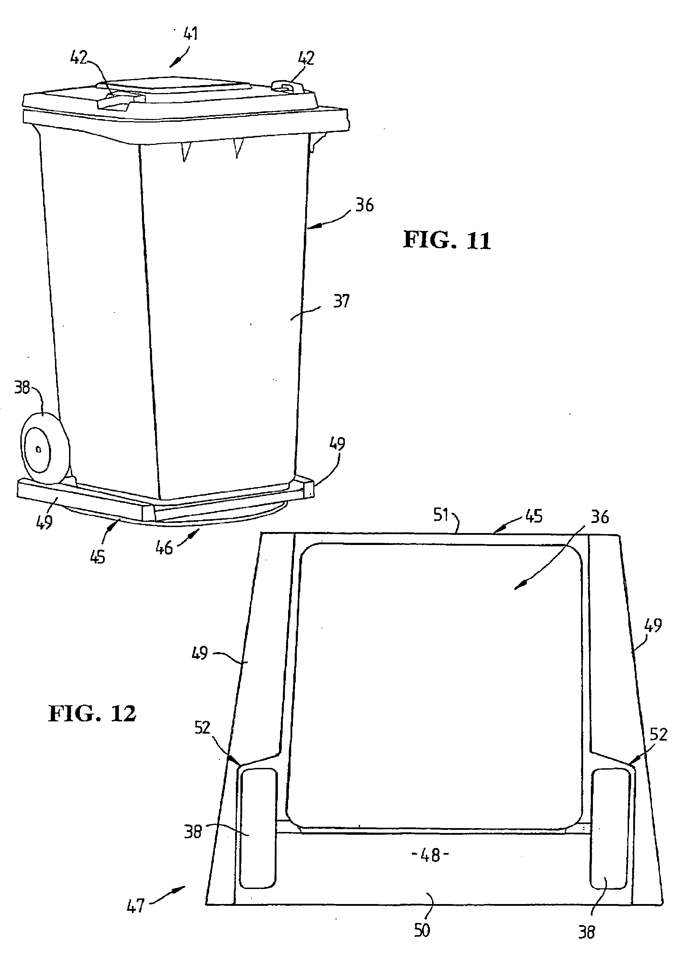

Referring now to Figs. 11 and 12, there is illustrated a second embodiment of a rotatable base assembly 45 according to the present invention, in Fig. 11 showing in combination with a waste container 36. The base assembly 45 includes a base 46 similar to the base 12 and a platform 47 supported on the base 46 for rotation about a substantially vertical axis in a similar manner to the support of the platform 11 on the base 12.

The platform 47 in this case has a planar container supporting surface 48 bounded on opposite sides by upstanding side ribs or ridges 49 which converge towards each other from the front 50 of the platform 47 to the rear 51 thereof. In addition, the ribs or ridges 49 are indented adjacent the front 50 of the platform 47 which increase the width of the platform 47 adjacent the front 50 thereof and defines opposite wheel recesses 52 in which the wheels 38 of the container 36 may locate. As is apparent in Fig. 12, the supporting surface 48 of the platform 47 defined between the ribs 49 is substantially complementary to the cross sectional shape of the lower portion of the waste container 36 which may be supported on the platform 47 such that it can be located neatly and securely on the platform 47.

The rotatable base assembly 45 is used in a similar manner to that described with reference to Figs. 7 to 10 with in this case, the waste container 36 when located on the platform 46 being neatly and closely received between the complementary shaped side ribs or ridges 49. Further, the converging nature of the side ribs or ridges 49 and/or the recesses 52 for the container wheels 38 permits the container 36 to be loaded onto the open front 50 of the platform 47 only and not be pushed off the rear of the platform 47.

The rotatable base assembly may be formed of plastics suitably injection moulded plastic typically recycled plastics but may be formed of metals or other materials. The base assembly being relatively thin may be easily stacked flat for shipping and handling thereby saving costs. Typically, the base assembly has a height of approximately 70 mm to enable easy transfer of the waste container to and from the platform however this dimension may vary.

The rotatable base assemblies allows the consumer to rotate a waste container supported thereon with little effort using just one hand and consumers are not required to touch the bin in any area that might be unhygienic. No change is required in the design of conventional "wheelie" bins which are commonly in use as waste containers.

Whilst the base assemblies 10 and 45 are most suited for use with containers 36 of a size which will neatly locate on the platforms 11 and 47, they may be used with smaller size containers which will simply sit on top of the platforms 11 and 47.

In the embodiments described, the bases 12 and 46 are of a generally circular configuration however they may be of square configuration in plan view or of any other shape. In one particular form, the base 12 of the assembly 10 of Figs. 1 to 6 may be substantially identically to the platform 11 such that only a single mould is required for both components.

The pin 26 for retaining the platform to the base most preferably is formed of plastics but may be formed of metal. In some cases also, a bearing or bush may be provided between the pin 26 and platform and/or base.

The platform in the described embodiment is supported by rollers to the base which effectively act as bearings transferring load from the platform to the base. The rollers may be in other forms that than illustrated such as in the form of spherical rollers located within part spherical recesses on the under side of the platform. In another arrangement, the rollers or other bearings may be supported in a fixed position on the base and cooperate with an annular track provided on the underside of the platform.

The terms "comprising" or "comprises" or derivates thereof as used throughout the specification and claims are taken to specify the presence of the stated features, integers and components referred to but not preclude the presence or addition of one or more other feature/s, integer/s, component/s or group thereof.

Whilst the above has been given by way of illustrative embodiment of the invention, all such modifications and variations thereto as would be apparent to persons skilled in the art are deemed to fall within the scope of the invention as defined in the appended claims.

## Claims

1. A rotatable base assembly (10,45) for a single waste container (36) of the type having a pair of opposite wheels (38) by which said container (36) may be wheeled when tipped, said base assembly (10,45) having a platform (11,47) and a base (12,46), said platform (11,47) being supported on said base (12,46) for rotation about a substantially vertical axis, said platform (11,47) having a planar upper surface (13,48) and a front (17,50) and a rear (16,51), an entry/exit at the front (17,50) of said platform (11,47) through which said waste container (36) may be moved wholly onto said platform (11,47) or moved from said platform (11,47), and means for constraining said waste container (36) on said platform (11,47), **characterised in that** said constraining means includes one or more ribs or ridges (14,49) on opposite sides of said platform (11,47) and extending upwardly relative to said planar upper surface (13,48) of said platform (11,47), said ribs or ridges (14,49) defining recesses for receiving said wheels (38) of said waste container (36) for locating said container (36) on said platform (11,47) whereby a waste container (36) supported on said platform (11,47) may be rotated with said platform (11,47) about said vertical axis.

2. A rotatable base assembly (10,45) as claimed in claim 1 **characterised in that** said ribs or ridges (14,49) converge towards each other from the front (17,50) to the rear (16,51) of the platform (11,47).

3. A rotatable base assembly (10) as claimed in claim 1 or claim 2 **characterised in that** said constraining means include a rib or ridge (14) located at the rear of said platform (11) to act as a stop to said waste container (36).

4. A rotatable base assembly (10,45) as claimed in claim 2 or claim 3 **characterised in that** said ribs or ridges (14,49) define a platform area substantially complementary to the cross section of the container (36) and wheels (38).

5. A rotatable base assembly (10) according to any one of the preceding claims and **characterised by** pivot means (26) between the platform (11) and base (12) and defining said vertical axis.

6. A rotatable base assembly (10) as claimed in claim 5 **characterised in that** said pivot means (26) comprise axle means (26) located in aligned apertures (25,33) arranged centrally in the platform (11) and base (12).

7. A rotatable base assembly (10) as claimed in claim 6 **characterised in that** said axle means (26) comprises a pin which positively connects said platform (11) to said base (12).

8. A rotatable base assembly (10) as claimed in any one of the preceding claims and **characterised by** bearing means between said platform (11) and base (12) to support the platform (11) on the base (12).

9. A rotatable base assembly (10) as claimed in claim 8 **characterised in that** said bearing means are radially spaced from the centre of the platform (11) and base (12).

10. A rotatable base assembly (10) as claimed in claim 8 or claim 9 **characterised in that** said bearing means are supported on one of the platform (11) and base (12) and cooperate with an annular track on the other of the platform (11) or base (12).

11. A rotatable base assembly (10) as claimed in any one of claims 8 to 10 **characterised in that** said bearing means comprise a plurality of bearings, said bearings comprising rollers (21) mounted for rotation about axes extending radially from the centre of the platform (11) and base (12).

12. A rotatable base assembly (10) as claimed in any one of claims 8 to 10 **characterised in that** said bearing means comprise ball bearings.

13. A rotatable base assembly (10,45) as claimed in any one of the preceding claims **characterised in that** said platform (11,47) is rotatable between a first position in which said waste container (36) may be moved wholly onto said platform (11,45) through said entry/exit to a position over said pivot axis and a second position in which said container (36) and platform (11,47) are rotated about said vertical axis such that said container (36) is constrained from movement to or from said platform (11,47).

14. A rotatable base assembly (10,45) as claimed in claim 13 **characterised in that** said second position is approximately 180° from the first position.

## Patentansprüche

1. Rotierbare Bodenanordnung (10, 45) für einen einzelnen Abfallcontainer (36) von der Art, die ein Paar gegenüberliegende Räder (38) besitzt, mithilfe derer der besagte Container (36) bei der Abladung gerollt werden kann, wobei die besagte Bodenanordnung (10, 45) eine Plattform (11, 47) und eine Grundplatte (12, 46) besitzt, wobei die besagte Plattform (11, 47) zwecks Drehung um eine im Wesentlichen vertikale Achse auf der besagten Grundplatte (12, 46) gestützt wird, wobei die besagte Plattform (11, 47) eine ebene obere Oberfläche (13, 48) und eine Vorderseite (17, 50) und eine Rückseite (16, 51), einen Eingang/Ausgang an der Vorderseite (17, 50) der besagten Plattform (11, 47), durch den der besagte Abfallcontainer (36) gänzlich auf die besagte Plattform (11, 47) bewegt oder von der besagten Plattform (11, 47) herunter bewegt werden kann, sowie Mittel zur Festhaltung des besagten Abfallcontainers (36) auf der besagten Plattform (11, 47) besitzt, **dadurch gekennzeichnet, dass** das besagte Festhaltemittel eine oder mehrere Rippen oder Erhöhungen (14, 49) auf gegenüberliegenden Seiten der besagten Plattform (11, 47) umfasst, die sich gegenüber der besagten ebenen oberen Oberfläche (13, 48) der besagten Plattform (11, 47) nach oben erstrecken, wobei die besagten Rippen oder Erhöhungen (14, 49) Einbuchtungen zur Aufnahme der besagten Räder (38) des besagten Abfallcontainers (36) zur Positionierung des besagten Containers (36) auf der besagten Plattform (11, 47) definieren, wodurch ein auf der besagten Plattform (11, 47) gestützter Abfallcontainer (36) mit der besagten Plattform (11, 47) um die besagte vertikale Achse gedreht werden kann.

2. Rotierbare Bodenanordnung (10, 45) nach Anspruch 1, **dadurch gekennzeichnet, dass** die besagten Rippen oder Erhöhungen (14, 49) sich einander von der Vorderseite (17, 50) bis zur Rückseite (16, 51) der Plattform (11, 47) annähern.

3. Rotierbare Bodenanordnung (10) nach Anspruch 1 oder Anspruch 2, **dadurch gekennzeichnet, dass** das besagte Festhaltemittel eine Rippe oder Erhöhung (14) einschließt, die sich an der Rückseite der besagten Plattform (11) befindet, um als Anschlag des besagten Abfallcontainers (36) zu wirken.

4. Rotierbare Bodenanordnung (10, 45) nach Anspruch 2 oder Anspruch 3, **dadurch gekennzeichnet, dass** die besagten Rippen oder Erhöhungen (14, 49) einen Plattformbereich definieren, der im Wesentlichen zusätzlich zum Querschnitt des Containers (36) und der Räder (38) ist.

5. Rotierbare Bodenanordnung (10) nach einem der vorherigen Ansprüche, **gekennzeichnet durch** Zapfenmittel (26) zwischen der Plattform (11) und der Grundplatte (12), die die besagte vertikale Achse definieren.

6. Rotierbare Bodenanordnung (10) nach Anspruch 5, **dadurch gekennzeichnet, dass** die besagten Zapfenmittel (26) Achsmittel (26) umfassen, die sich in ausgerichteten Öffnungen (25, 33) befinden, die zentral in der Plattform (11) und Grundplatte (12) angeordnet sind.

7. Rotierbare Bodenanordnung (10) nach Anspruch 6, **dadurch gekennzeichnet, dass** das besagte Achsmittel (26) einen Bolzen umfasst, der die besagte Plattform (11) mit der besagten Grundplatte (12) positiv verbindet.

8. Rotierbare Bodenanordnung (10) nach einem der vorherigen Ansprüche, **gekennzeichnet durch** Lagermittel zwischen der besagten Plattform (11) und der Grundplatte (12), um die Plattform (11) auf der Grundplatte (12) zu stützen.

9. Rotierbare Bodenanordnung (10) nach Anspruch 8, **dadurch gekennzeichnet, dass** die besagten Lagermittel radial von dem Zentrum der Plattform (11) und Grundplatte (12) verteilt sind.

10. Rotierbare Bodenanordnung (10) nach Anspruch 8 oder Anspruch 9, **dadurch gekennzeichnet, dass** die besagten Lagermittel auf einer der Plattform (11) und Grundplatte (12) gestützt sind und mit einer ringförmigen Führung auf der anderen der Plattform (11) oder Grundplatte (12) kooperieren.

11. Rotierbare Bodenanordnung (10) nach einem der Ansprüche 8 bis 10, **dadurch gekennzeichnet, dass** die besagten Lagermittel eine Vielzahl von Lagern umfassen, wobei die Lager Rollen (21) umfassen, die für eine Drehung um Achsen montiert sind, die sich radial von dem Zentrum der Plattform (11) und Grundplatte (12) erstrecken.

12. Rotierbare Bodenanordnung (10) nach einem der Ansprüche 8 bis 10, **dadurch gekennzeichnet, dass** die besagten Lagermittel Kugellager umfassen.

13. Rotierbare Bodenanordnung (10, 45) nach einem der vorherigen Ansprüche, **dadurch gekennzeichnet, dass** die besagte Plattform (11, 47) drehbar zwischen einer ersten Position ist, in der der besagte Abfallcontainer (36) gänzlich auf die besagte Plattform (11, 45) durch den besagten Eingang/Ausgang zu einer Position über der besagten Zapfenachse bewegt werden kann, sowie einer zweiten Position, in der der besagte Container (36) und die Plattform (11, 47) um die besagte vertikale Achse gedreht werden, so dass der besagte Container (36) von einer Bewegung auf die oder von der besagten Plattform (11, 47) herunter abgehalten wird.

14. Rotierbare Bodenanordnung (10, 45) nach Anspruch 13, **dadurch gekennzeichnet, dass** die besagte zweite Position ungefähr 180° von der ersten Position ist.

## Revendications

1. Ensemble de base rotatif (10, 45) pour un unique conteneur à déchets (36) du type de ceux qui possèdent une paire de roues opposées (38) au moyen desquelles on peut faire rouler ledit conteneur (36) lorsqu'il est incliné, ledit ensemble de base (10, 45) possédant une plate-forme (11, 47) et une base (12, 46), ladite plate-forme (11, 47) reposant sur ladite base (12, 46) pour tourner autour d'un axe substantiellement vertical, ladite plate-forme (11, 47) possédant une surface supérieure plane (13, 48) et un avant (17, 50) et un arrière (16, 51), une entrée/sortie à l'avant (17, 50) de ladite plate-forme (11, 47) via laquelle ledit conteneur à déchets (36) peut être déplacé entièrement sur ladite plate-forme (11, 47) ou déplacé depuis ladite plate-forme (11, 47), et des organes pour retenir ledit conteneur à déchets (36) sur ladite plate-forme (11, 47), **caractérisé en ce que** ledit organe de rétention comprend une ou plusieurs nervures ou stries (14, 49) sur les côtés opposés de ladite plate-forme (11, 47) et se prolongeant vers le haut par rapport à ladite surface supérieure plane (13, 48) de ladite plate-forme (11, 47), lesdites nervures ou stries (14, 49) définissant des rainures destinées à recevoir lesdites roues (38) dudit conteneur à déchets (36) pour placer ledit conteneur (36) sur ladite plate-forme (11, 47) moyen par lequel on peut faire tourner un conteneur à déchets (36) reposant sur ladite plate-forme (11, 47) avec ladite plate-forme (11, 47) autour dudit axe vertical.

2. Ensemble de base rotatif (10, 45) selon la revendication 1 **caractérisé en ce que** lesdites nervures ou stries (14, 49) convergent l'une vers l'autre depuis l'avant (17, 50) jusqu'à l'arrière (16, 51) de la plate-forme (11, 47).

3. Ensemble de base rotatif (10) selon la revendication 1 ou la revendication 2 **caractérisé en ce que** ledit organe de rétention comprend une nervure ou strie (14) située à l'arrière de ladite plate-forme (11) destinée à servir de butée d'arrêt pour ledit conteneur à déchets (36).

4. Ensemble de base rotatif (10, 45) selon la revendication 2 ou la revendication 3 **caractérisé en ce que** lesdites nervures ou stries (14, 49) définissent une zone de plate-forme substantiellement complémentaire à la section transversale du conteneur (36) et des roues (38).

5. Ensemble de base rotatif (10) selon l'une quelconque des revendications précédentes et **caractérisé par** des organes pivots (26) entre la plate-forme (11) et base (12) et définissant ledit axe vertical.

6. Ensemble de base rotatif (10) selon la revendication 5 **caractérisé en ce que** lesdits organes pivots (26) comprennent des axes (26) placés dans des ouvertures alignées (25, 33) disposées centralement dans la plate-forme (11) et base (12).

7. Ensemble de base rotatif (10) selon la revendication 6 **caractérisé en ce que** lesdits axes (26) comprennent une tige qui relie positivement ladite plate-forme (11) à ladite base (12).

8. Ensemble de base rotatif (10) selon l'une quelconque des revendications précédentes et **caractérisé par** des moyens de support entre ladite plate-forme (11) et base (12) destinés à soutenir la plate-forme (11) sur la base (12).

9. Ensemble de base rotatif (10) selon la revendication 8 **caractérisé en ce que** lesdits moyens de support sont radialement espacés depuis le centre de la plate-forme (11) et base (12).

10. Ensemble de base rotatif (10) selon la revendication 8 ou la revendication 9 **caractérisé en ce que** lesdits moyens de support reposent sur l'une de la plate-forme (11) et base (12) et coopèrent avec une piste annulaire sur l'autre de la plate-forme (11) ou base (12).

11. Ensemble de base rotatif (10) selon l'une quelconque des revendications 8 à 10 **caractérisé en ce que** lesdits moyens de support comprennent une pluralité de bagues, lesdites bagues comprenant des rouleaux (21) montés pour tourner autour d'axes s'étendant radialement depuis le centre de la plate-forme (11) et base (12).

12. Ensemble de base rotatif (10) selon l'une quelconque des revendications 8 à 10 **caractérisé en ce que** lesdits moyens de support comprennent des roulements à billes.

13. Ensemble de base rotatif (10, 45) selon l'une quelconque des revendications précédentes **caractérisé en ce que** l'on peut faire tourner ladite plate-forme (11, 47) entre une première position dans laquelle ledit conteneur à déchets (36) peut être déplacé entièrement sur ladite plate-forme (11, 45) via ladite entrée/sortie jusqu'à un emplacement sur ledit axe pivot et une seconde position dans laquelle on fait tourner lesdits conteneur (36) et plate-forme (11, 47) autour dudit axe vertical de telle sorte que ledit conteneur (36) est retenu dans son déplacement jusqu'à ou depuis ladite plate-forme (11, 47).

14. Ensemble de base rotatif (10, 45) selon la revendication 13 **caractérisé en ce que** ladite seconde position est approximativement à 180° de la première position.
